Europäisches Patentamt

European Patent Office

Office européen des brevets

(19)

(11) **EP 0 541 488 B1**

(12) **EUROPEAN PATENT SPECIFICATION**

(45) Date of publication and mention
of the grant of the patent:
**21.05.1997 Bulletin 1997/21**

(51) Int Cl.⁶: **F16C 11/06**, B29C 45/14

(21) Application number: **92810836.4**

(22) Date of filing: **30.10.1992**

(54) **Ball joint assembly and method of construction**

Kugelgelenk und Verfahren zur Herstellung

Joint à rotule, et méthode de construction

(84) Designated Contracting States:
**DE FR GB IT SE**

(30) Priority: **08.11.1991 US 789165**
**06.03.1992 US 846820**

(43) Date of publication of application:
**12.05.1993 Bulletin 1993/19**

(73) Proprietor: **MAC LEAN-FOGG COMPANY**
**Mundelein, Illinois 60143 (US)**

(72) Inventors:
• **Hellon, Keith**
**Libertyville, Illinois 60048 (US)**

• **Pazdirek, Jiri**
**Schaumberg, Illinois 60193 (US)**

(74) Representative: **Patentanwälte**
**Schaad, Balass, Menzl & Partner AG**
**Dufourstrasse 101**
**Postfach**
**8034 Zürich (CH)**

(56) References cited:
**FR-A- 585 497**      **FR-A- 813 643**
**FR-A- 2 199 369**    **FR-A- 2 436 278**
**FR-E- 30 245**       **GB-A- 1 112 558**
**GB-A- 2 229 765**    **GB-A- 2 229 765**
**US-A- 1 914 444**    **US-A- 3 147 025**

## Description

## FIELD OF THE INVENTION

This invention relates in general to ball joint assemblies. It relates particularly to a ball joint of the type which is normally used for connecting movable parts in a vehicle suspension system.

## BACKGROUND OF THE INVENTION

Automobiles and other vehicles normally incorporate suspension systems designed to absorb road shock and other vibrations. Many vehicles are provided with independent suspensions located at each wheel. These suspensions are designed to independently minimize the effect of shock loading on each of the wheels.

Suspension systems commonly employ stabilizer bars which interconnect independent suspensions on opposite wheels and are effective to increase the roll rigidity and improve the steering stability of the vehicle. The stabilizer bars are connected to each wheel suspension by suspension links through ball joint assemblies.

Conventional ball joint comprise a ball stud seated in a socket. In a suspension link, each end of the link incorporates a socket and a ball is seated in each socket. The stud which extends from the ball in one ball joint assembly is connected to a wheel suspension component. The stud extending from the ball in the other ball joint assembly is connected to one end of a stabilizer bar.

The socket in a ball joint typically incorporates a bearing made from a plastic resin. The outer surface of the ball seats on the inner surface of the bearing and the stud extends out of the socket. The ball stud is free to move universally through a conical angle of approximately 30 degrees relative to the socket.

A ball joint according to the first part of the claim 1 is disclosed in Jordan GB Patent No. 806,897. A frusto-conical surface of a collar formed at a stud engages a correspondingly tapered aperture of a suspension component of a vehicle and the suspension component is firmly secured to the stud by a clamp nut threaded onto a conical threaded portion of the stud. A further nut is threaded onto the stud between the frusto-conical surface and the ball of the ball stud, whereby under normal condition there exists a small distance between the further nut and suspension component. The further nut is only used for releasing the suspension component from the stud, after the clamp nut has been removed by turning the further nut to exert pressure against the suspension component, whereby the suspension component is bodily displaced and disengagement between the frusto-conical surface and the tapered aperture is effected.

In further prior art ball joint assemblies it was conventional to machine the ball surface to reduce friction between the ball and the bearing. It is also known in the prior art, as shown in Jackson U.S. Patent No. 4,290,181, to construct a ball joint wherein a plastic bearing member is molded in the ball joint socket with the ball in place. Jackson states that the ball must be rotated while the bearing material congeals in order to form a suitable bearing surface.

The stud portion of the ball is conventionally connected to a wheel suspension component, for example, by fastening the component between a plate fitted onto an inner portion of the stud and a nut threaded onto the threaded outer end of the stud, as seen in Kidokoro U.S. Patent No. 5,011,321. It is also known to form the plate integrally with the stud, in the form of a flange or collar, as seen in Shirai et al. U.S. Patent No. 5,009,538. In any event, substantial forces are brought to bear on a ball joint and these load forces produce stresses throughout the joint. The stresses must be absorbed by the various components of the joint, including the plate or collar and nut.

## SUMMARY OF THE INVENTION

It is an object of the present invention to provide an improved ball joint.

It is another object to provide a ball joint which is simple and inexpensive to manufacture.

It is yet another object to provide a ball joint with an improved stud and collar construction, which is easily manufactured and in which the ability of the stud to absorb stress is enhanced.

The foregoing and other objects are realized in accord with the present invention as defined in the claim 1.

Further, the stud is made with a collar roll-formed between its threads and the ball. The collar is formed in such a manner that an upper groove encircles the stud above the collar and a lower groove below the collar. The upper and lower collar surfaces are inclined away from the respective grooves. The upper groove creates space so that the stud can be moved angularly. The lower groove forms a relief which permits a threaded collar nut to be seated snugly against it with a sealant in the groove. The stud threads that engage the collar nut below the collar have a minor diameter that can be 1) larger than the remaining stud threads, or 2) greater than or equal to the normal pitch diameter of the remaining stud threads.

## BRIEF DESCRIPTION OF THE DRAWINGS

The invention, including its construction and method of operation, together with additional object and advantages thereof, is illustrated more or less diagrammatically in the drawings, in which:

Figure 1 is a sectional view through a ball joint assembly embodying features of the present invention, with parts removed;

Figure 2 is an elevational view of a ball stud and bearing sub-assembly embodying features of the present invention;

Figure 3 is a sectional view of the ball stud shown in Figure 2, seated in a mold;

Figure 4 is a sectional view of the ball stud and bearing sub-assembly of Figure 2 placed in a clamp, including shadow lines illustrating the movement of the ball stud in the clamp;

Figure 5 is a sectional view of the ball stud of Figure 2 attached to a wheel suspension component;

Figure 6 illustrates a collar nut; and

Figure 7 illustrates a ball stud embodying features of the present invention.

## DETAILED DESCRIPTION OF THE PREFERRED EMBODIMENT

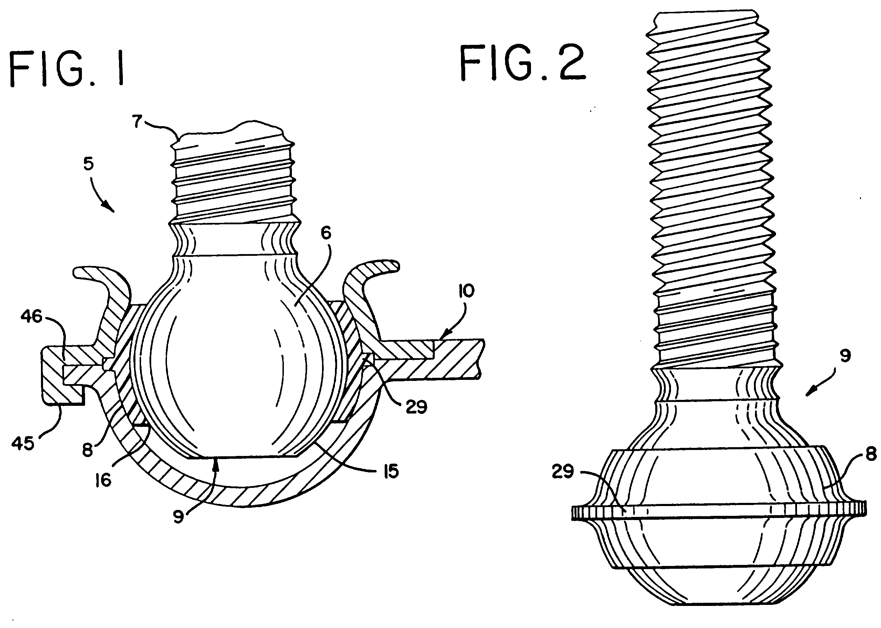

Referring now to the drawings, and particularly to Figure 1, a ball joint assembly embodying features of the present invention is seen generally at 5. The assembly 5 includes a unitary ball 6 and stud 7, with the ball seated in a bearing 8 to form a ball stud and bearing sub-assembly 9. The bearing 8 of the sub-assembly 9 is clamped into one end of an automobile suspension link 10.

The ball 6 and stud 7 are a one-piece construction made from steel. Generally speaking, the ball stud illustrated in the drawings may be achieved by cold forming and roll-forming steel in a manner well within the ability of one skilled in the art.

The ball 6 is then treated to create a myriad of microcavities on its surface 15. The microcavities are formed by impelling cast steel shot at the ball surface under pressure. This may be accomplished by "wheelabrating" using a conventional machine known as a "Wheelabrator". The Wheelabrator machine tumbles parts on an endless belt during the impelling of shot. The microcavities must be small enough to prevent viscous bearing material from flowing into them. Small shot size is used in the machine to assure this result.

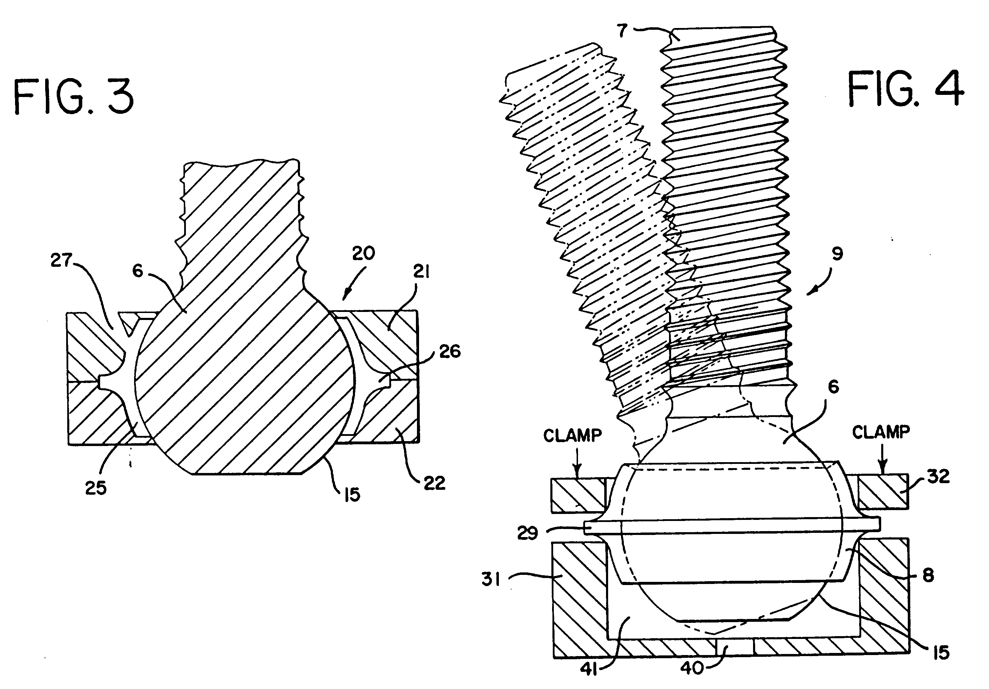

Referring now to Figure 3, the bearing 8 is formed directly on the surface 15 of the ball 6 by placing the ball in a mold 20 and injecting viscous bearing material therein. Prior to placing the ball 6 inside the mold 20, the ball is cleaned to remove any grease, mold release or other foreign matter from the ball surface 15 so that such matter is not pushed by the advancing viscous bearing material to a point farthest from the inlet, thereby causing the hardened bearing to have a knit line which can crack easily.

The mold 20 comprises an upper mold section 21 and a lower mold section 22. When mated together in the manner illustrated over the surface 15 of the ball, they form a generally ring-shaped mold cavity 25 over a portion of that surface. The cavity 25 conforms generally to the shape of the ball surface 15 except that an annular cavity extension 26 is defined around its periphery. An injection inlet 27 provides access to the cavity 25, 26.

Viscous bearing material in the form of a thermoplastic resin is injected into the mold through inlet 27. In the preferred embodiment, acetal is injected at a temperature between 365° and 435° F. After the viscous bearing material hardens, the ball stud 6, 7 and bearing 8 are removed from the mold by separating the mold halves 21 and 22. The bearing 8 is generally ring-shaped and has a plastic flange 29 formed around its circumference, as best seen in Figures 2 and 4. The projected area of the bearing is equally divided above and below the annular flange so that resultant force passes through the center of the ball, creating the shortest moment-arm for force applied to the stud.

After removal from the mold, full shrinkage of the plastic bearing 8 takes place in approximately 24 hours. At this point the ball 6 is locked inside the bearing 8, i.e., it will not move freely.

In order to facilitate the desired movement of the ball 6 on the bearing 8, lubricant is introduced between the ball 6 and the bearing 8. This is accomplished in the manner shown in Figure 4. As seen in Figure 4, the ball stud and bearing sub-assembly 9 is placed between two fixtures 31 and 32. These fixtures 31, 32 seat tightly against the outside surface of the bearing 8 with the flange 29 between them. The fixtures 31, 32 are pressed against the bearing 8 by clamps (not shown) so as to rigidly fix the ball 6 and bearing 8 in place.

An inlet port 40 is located at one end of the fixture 31 and provides a path for the introduction of lubricant into the space 41 overlying the bearing surface 15 at the free end of the ball 6. A lubricant having a coefficient of viscosity low enough to flow into the microcavities is introduced to the space 41 through the port 40. The ball stud 7 is moved back, forth and around as the lubricant is introduced. Part of the desired movement is illustrated by the phantom lines shown in Figure 4. As the ball 6 moves, lubricant in the microcavities on the surface 15 exposed in space 41 works its way between the opposed surfaces of the ball 6 and the bearing 8.

Figure 4 also illustrates the full range of motion for the ball stud 6, 7 in relation to the bearing 8. This full range of motion is accommodated in the entire ball stud sub-assembly 9 when seated in a link 10, as shown in Figure 1.

It will be seen that the aforedescribed method of manufacturing the ball stud sub-assembly 9 provides substantial advantages. For example, the need for precise tolerances in machining the ball 6 is eliminated, and a well lubricated joint is achieved in a simple and efficient manner. In this regard, it should be recognized that a suitable ball 6 surface may be achieved by methods other than wheelabrating.

As seen in Figure 1, the ball stud and bearing sub-assembly 9 is seated in the end of a suspension link 10 to form a ball joint assembly 5. The bearing 8 is held in place inside the link 10 end by securing the flange 29 between the sandwiched halves 45 and 46 of the link end. Because the bearing 8 is fixed in place inside the link end 10 by the flange 29, there is no need for the bearing 8 to conform completely to the inner surface of the link end halves 45 and 46. Thus, there is no need for maintaining close tolerances in forming the bearing 8.

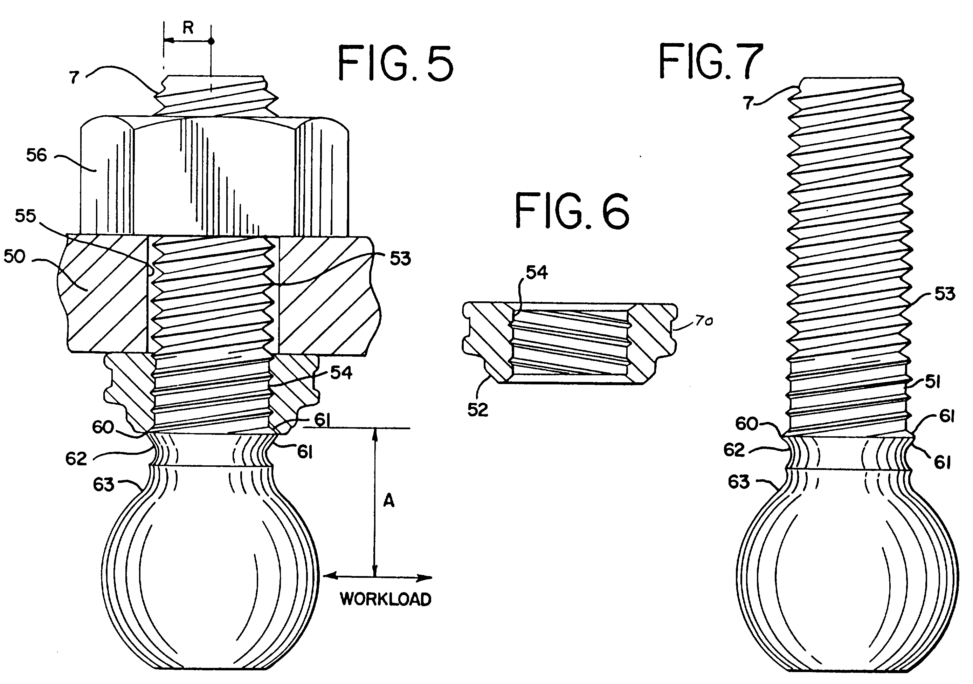

Turning now to Figure 5, a ball and stud 6, 7 are shown secured to a component 50 of a wheel suspension. The stud 7 has external threads 51. A reinforcing collar nut 52 having internal threads 54 and shown in detail in Figure 6 is threaded onto the stud 7. The stud 7 is then passed through an aperture 55 in the component 50 and the exposed outer end of the stud 7 is secured by a clamp nut 56.

The ball stud 6, 7 and collar nut 52, being rigidly connected to the suspension component 50, is subjected to load forces that are placed on it through the vehicle suspension system. An example of one of these load forces is graphically illustrated by the double-head arrow in Figure 5. The construction of the ball stud 6, 7 and collar nut 52 is particularly effective in transmitting these forces without damage.

Specifically, the stud 7 is roll-formed during manufacture to form a collar 60 around its mid-section. In forming the collar 60, which has converging frusto-conical faces 61, a groove 62 is left surrounding the stud below the collar and another groove 63 is left above it. The collar nut 52 is threaded on and seated against the collar 60 with only a low torque. This low torque application of the collar nut avoids simple cantilever loading of the shank of the ball-stud by redistributing the "work-load" to the outer diameter of the collar nut and, therewith, clamping the stabilizing bar 50 between the collar nut and the flanged locknut. It also avoids algebraic addition of the loads on the ball-stud shank. The separate collar nut, beside the favorable force distribution, provides a ball stud that does not require machining to achieve proper operating clearance.

This construction enhances the ability of the stud to withstand stress by effectively redirecting the load forces applied to the ball stud in order to distribute these forces throughout the ball stud. This enhanced ability can be demonstrated best by comparing the section moduli of a ball stud and nut without a collar construction versus the ball stud and collar nut as described herein. For ease of analysis, the "non-collar" construction may be modeled by a simple cantilever for which load forces are applied in a direction perpendicular to the cantilever beam; and the "collar" construction may be modeled by a simple cantilever for which the load forces are applied in a direction parallel to the cantilever beam (i.e., the forces are "offset").

SIMPLE CANTILEVER

$$\text{Moment of inertia} = \frac{\pi}{4}\, R^4 = I_{SC}$$

$$\text{Section modulus} = \frac{\pi}{4}\, R^3 = Z_{SC}$$

OFFSET SIMPLE CANTILEVER

(by the parallel axis theorem)

$$\textbf{Moment of inertia} = I_{OSC} = \frac{\pi}{4} R^4 + \pi R^2 (R^2)$$

$$I_{OSC} = R^4 \left( \frac{\pi}{4} + \pi \right) = \frac{5}{4}\, \pi R^4$$

$$Z_{OSC} = \frac{5}{4}\, \pi R^3$$

RATIO OF SECTION MODULI

$$= \frac{\frac{5}{4}\pi R^3}{\frac{1}{4}\pi R^3} = 5:1$$

$I_{SC} =$      moment of inertia (simple cantilever)
$Z_{SS} =$      section modulus (simple cantilever)
$I_{OSC} =$      moment of inertia (offset simple cantilever)
$Z_{OSC} =$      section modulus (offset simple cantilever)
R =      radius of ball stud at 62

The strength benefits gained by using the offset cantilever approach are derived from the "fulcrum" action applied at 60. This action places most of the fibers in the stud in near pure tension. In comparison, forces acting on the simple cantilever place less than 1/2 of the fibers in tension. As illustrated above, the section moduli with the collar 60 is approximately 5 times higher than it is without the collar 60, i.e., the former increases the maximum load strength by approximately 5 times under ideal conditions.

Figures 6 and 7 illustrate further details of the preferred thread connection between the stud 7 and the collar nut 52. As seen in Figure 7, the minor diameter of the threads 51 immediately below the collar 60 is larger than the minor diameter of the remaining threads 53 of stud 7. For ease of forming, the minor diameter of the threads immediately below the collar 60 may be made approximately equal to the normal pitch diameter of the remaining threads 53 on the stud 7. The mating threads 54 of the collar nut 52, as seen in Figure 6, include a minor diameter corresponding to the size of the minor diameter of the threads 51 immediately below the collar 60.

The collar nut 52 is also formed with an annular groove 70 around its periphery. This groove is adapted to receive the outer end of a dust cover (not shown) in sealing relationship. The inner end of that same dust cover is then seated over the outwardly extending lip 71 on the link end half 46. The separate collar nut, beside the favorable force distribution, provides a ball stud that does not require machining to achieve proper operating clearance.

**Claims**

1. A ball joint for connecting two movable components of a vehicle suspension system together comprising:

   - a ball stud having a ball (6) for seating in a socket formed in one suspension component (10) and connecting the ball stud to the one component (10);
   - a stud (7) extending from said ball (6) for connecting said ball stud to another suspension component (50) and having a cylindrical portion which is threaded with external screw threads (51,53);
   - said stud (7) having a collar (60) formed around it between said threaded portion and said ball (6);
   - a frusto-conical surface (61) formed on said collar (60) immediately adjacent said threaded portion;
   - said threaded portion extending to adjacent an exposed end of the stud (7);
   - a clamp nut (56) threaded onto said threaded portion from said exposed end;
   - a collar nut (52) threaded onto said stud (7);

   characterized by:

   - said collar nut (52) having a face and being threaded onto said threaded portion of said stud (7) to where said surface (61) and said face engage each other and secure said collar nut (52) against said collar (60);
   - said threaded portion being adapted to pass loosely through an aperture (55) in the other suspension component (50); and
   - said clamp nut (56) being adapted for clamping the other suspension component (50) tightly against said collar nut (52) to form a rigid connection between the ball stud (7) and the other suspension component (50).

2. The ball joint defined in claim 1 further characterized in that at least one (51) of said screw threads (51, 53) on said stud (7) has a minor diameter that is approximately equal to the pitch diameter of other screw threads (53) on said stud (7).

3. The ball joint defined in claim 1 or 2 further characterized in that at least one (51) of said screw threads (51, 53) on said stud (7) has a minor diameter that is greater than a minor diameter of other screw threads (53) on said stud (7).

4. The ball joint defined in claim 2 or 3 characterized in that a minor diameter of said inner screw threads (54) of said collar nut (52) corresponds to the minor diameter of said at least one screw thread (51) that is greater than the minor diameter of other screw threads (53) on said stud (7).

5. The ball joint defined in one of the claims 1 to 4 further characterized in that:
the face of said collar nut (52) is formed thereon in a conical shape complementary to said frusto-conical surface (61) formed on said collar (60).

6. The ball joint defined in one of the claims 1 to 5 further characterized in that:
said collar nut (52) is seated against said collar (60) with a force exerted by a low torque applied to the nut (52).

7. The ball joint of claim 1 further characterized in that:
said collar nut face is frusto-conical in shape.


**Patentansprüche**

1. Kugelgelenk zur gegenseitigen Verbindung von zwei beweglichen Bauteilen eines Fahrzeugaufhängungssystems, umfassend:

- einen Kugelzapfen mit einer Kugel (6) zur Sitzanordnung in einer in einem Aufhängungsbauteil (10) ausgebildeten Pfanne und zur Verbindung des Kugelzapfens mit dem einen Bauteil (10);
- einen von der Kugel (6) aus verlaufenden Zapfen (7) zur Verbindung des Kugelzapfens mit einem anderen Aufhängungsbauteil (50), wobei der Zapfen einen zylindrischen Abschnitt mit Außenschraubgewinden (51, 53) besitzt;
- einen an dem Zapfen (7) vorgesehenen Bund (60), der um den Zapfen herum zwischen dem Gewindeabschnitt und der Kugel (6) ausgebildet ist;
- eine stumpfkegelige Oberfläche (61), die unmittelbar im Anschluß an den Gewindeabschnitt an dem Bund (60) ausgebildet ist;
- wobei der Gewindeabschnitt bis angrenzend an ein freiliegendes Ende des Zapfens (7) verläuft;
- eine von dem freiliegenden Ende aus auf den Gewindeabschnitt aufgeschraubte Spannmutter (56); und
- eine auf den Zapfen (7) aufgeschraubte Bundmutter (52);

gekennzeichnet durch:

- die Bundmutter (52), die eine Seitenfläche aufweist und auf den Gewindeabschnitt des Zapfens (7) aufgeschraubt ist, wobei die Oberfläche (61) und die Seitenfläche einander berühren und die Bundmutter (52) gegenüber dem Bund (60) sichern;
- den Gewindeabschnitt, der so ausgeführt ist, daß er lose durch eine Öffnung (55) in dem anderen Aufhängungsbauteil (50) verlaufen kann;
- die Spannmutter (56), die so ausgeführt ist, daß sie das andere Aufhängungsbauteil (50) fest gegenüber der Bundmutter (52) einspannt, um eine starre Verbindung zwischen dem Kugelzapfen (7) und dem anderen Aufhängungsbauteil (50) zu bilden.

2. Kugelgelenk nach Anspruch 1, weiterhin dadurch gekennzeichnet, daß mindestens eines (51) der Schraubgewinde (51, 53) an dem Zapfen (7) einen geringeren Durchmesser aufweist, der in etwa gleich dem Teilungsdurchmesser der anderen Schraubgewinde (53) an dem Zapfen (7) ist.

3. Kugelgelenk nach Anspruch 1 oder 2, weiterhin dadurch gekennzeichnet, daß mindestens eines (51) der Schraubgewinde (51, 53) an dem Zapfen (7) einen geringeren Durchmesser aufweist, der größer als ein geringerer Durchmesser anderer Schraubgewinde (53) an dem Zapfen (7) ist.

4. Kugelgelenk nach Anspruch 2 oder 3, dadurch gekennzeichnet, daß ein geringerer Durchmesser der Innenschraubgewinde (54) der Bundmutter (52) dem geringeren Durchmesser des mindestens einen Schraubgewindes (51) entspricht, der größer als der geringere Durchmesser anderer Schraubgewinde (53) an dem Zapfen (7) ist.

**5.** Kugelgelenk nach einem der Ansprüche 1 bis 4, weiterhin dadurch gekennzeichnet, daß die Seitenfläche der Bundmutter (52) daran in einer konischen Form ausgebildet ist, die der an dem Bund (60) ausgebildeten stumpfkegeligen Oberfläche (61) entsprechend ausgeführt ist.

**6.** Kugelgelenk nach einem der Ansprüche 1 bis 5, weiterhin dadurch gekennzeichnet, daß die Bundmutter (52) gegenüber dem Bund (60) einen Sitz aufweist, der durch eine mit niedrigem Drehmoment auf die Mutter (52) aufgebrachte Kraft entsteht.

**7.** Kugelgelenk nach Anspruch 1, weiterhin dadurch gekennzeichnet, daß die Seitenfläche der Bundmutter eine stumpfkegelige Form aufweist.

**Revendications**

**1.** Joint à rotule destiné à relier, l'un à l'autre, deux composants mobiles d'un système de suspension de véhicule comprenant :

- une tige de rotule comportant une rotule (6) pour être placée dans une cavité formée dans un premier composant de suspension (10) et reliant la tige de rotule au premier composant (10) ;
- une tige (7) s'étendant depuis ladite rotule (6) pour relier ladite tige de rotule à un autre composant de suspension (50) et comportant une partie cylindrique qui est filetée avec des filets externes de vis (51, 53) ;
- ladite tige (7) comportant une collerette (60) formée autour d'elle entre ladite partie filetée et ladite rotule (6) ;
- une surface conique tronquée (61) formée sur ladite collerette (60) immédiatement contiguë à ladite partie filetée ;
- ladite partie filetée s'étendant contiguë à une extrémité exposée de la tige (7) ;
- un écrou à garrot (56) vissé sur ladite partie filetée depuis ladite extrémité exposée ;
- un écrou à embase (52) vissé sur ladite tige (7);

   caractérisé par :

- ledit écrou à embase (52) comportant une face et étant vissé sur ladite partie filetée de ladite tige (7) jusqu'où ladite surface (61) et ladite face se mettent en prise l'une avec l'autre et fixent ledit écrou à embase (52) contre ladite collerette (60) ;
- ladite partie filetée étant adaptée pour passer, de manière lâche, à travers une ouverture (55) dans l'autre composant de suspension (50) ; et
- ledit écrou à garrot (56) étant destiné à serrer l'autre composant de suspension (50) étroitement contre ledit écrou à embase (52) pour former un raccordement rigide entre la tige de rotule (7) et l'autre composant de suspension (50).

**2.** Joint à rotule selon la revendication 1 caractérisé, de plus, en ce qu'au moins un (51) desdits filets de vis (51, 53) sur ladite tige (7) a un diamètre intérieur qui est à peu près égal au diamètre sur flancs des autres filets de vis (53) sur ladite tige (7).

**3.** Joint à rotule selon la revendication 1 ou 2 caractérisé, de plus, en ce qu'au moins un (51) desdits filets de vis (51, 53) sur ladite tige (7) a un diamètre intérieur qui est supérieur à un diamètre intérieur des autres filets de vis (53) sur ladite tige (7).

**4.** Joint à rotule selon la revendication 2 ou 3, caractérisé en ce qu'un diamètre intérieur desdits filets intérieurs de vis (54) dudit écrou à embase (52) correspond au diamètre intérieur dudit au moins un filet de vis (51) qui est supérieur au diamètre intérieur des autres filets de vis (53) sur ladite tige (7).

**5.** Joint à rotule selon l'une quelconque des revendications 1 à 4 caractérisé, de plus, en ce que :
   la face dudit écrou à embase (52) est formée selon une forme conique complémentaire à ladite surface conique tronquée (61) formée sur ladite collerette (60).

**6.** Joint à rotule selon l'une quelconque des revendications 1 à 5 caractérisé, de plus, en ce que :
   ledit écrou à embase (52) est placé contre ladite collerette (60) avec une force exercée par un faible couple appliqué à l'écrou (52).

**7.** Joint à rotule selon la revendication 1 caractérisé, de plus, en ce que :
ladite face d'écrou à embase est de forme conique tronquée.

FIG. 1

FIG. 2

EP 0 541 488 B1

FIG. 3

FIG. 4

EP 0 541 488 B1

FIG. 5

FIG. 7

FIG. 6

R

7

56

55

50

53

54

60

61

61

62

63

A

WORKLOAD

54

52

70

7

53

51

60

62

63

61

61

EP 0 541 488 B1